# EUROPEAN PATENT APPLICATION

(11) **EP 2 966 843 A1**
(43) Date of publication of application: **13.01.2016**
(21) Application number: 14760837.6
(22) Date of filing: 04.03.2014
(51) Int. Cl.: H04M 1/725, H04W 88/02, B42D 1/00

(54) **FLAT READING PRODUCT SUPPORTING INTERACTIVE LINKAGE SYSTEM**

(30) Priority: 04.03.2013 CN 201320099685 U; 04.03.2013 CN 201320099660 U; 08.10.2013 CN 201320626464 U; 04.01.2014 CN 201420028436 U
(71) Applicant: Yau, Yim Wai, N.T., Hong Kong (CN)
(72) Inventor: Yau, Yim Wai, N.T., Hong Kong (CN)
(74) Representative: ProI European Patent Attorneys
(86) International application number: PCT/CN2014/072863
(87) International publication number: WO 2014/135071

(57) **Abstract**

The invention involves information association technology of cross-media product, in particular to a plane publication product of an Interactive Interconnected Systems. The plane publication product is formed by associated data and media information data synthesis. The features are:
The Interactive Interconnected Systems is a composite of an electronic reading device and an electronic transmitter-receiver.
A plane publication product contains others publication information.
The Interactive Interconnected Systems includes an electronic reading device and an electronic transmitter-receiver. The multimedia information signal is a combination of various media data. The associated data is an URI (Uniform Resource Identifier). The electronic transmitter-receiver includes an associated data reception circuit, an associated data transmission circuit and a central processing unit (with memory).
The associated data reception circuit is attached with a short-distance signal transmission-reception circuit. The electronic transmitter-receiver is used to control the transceive of the associated data from the decomposition multimedia information signal. It receives the associated data decomposed by the transmission circuit of the electronic reading device, and then transmits the associated data to external data storage via remote communication technology. This can obtain the associated digital resource in a quick and efficiency way.

## Description

### [Technical Field]

The invention relates to an information association technology of a cross-media product, in particular to a plane publication product supporting an interaction association system for achieving barrier-free development of information.

### [Background Art]

With the rapid development of a broadband wireless access technology and a mobile terminal technology, people have an urgent hope to be able to obtain information and service from Internet conveniently at will in a mobile process whenever and wherever possible.

However, mobile Internet is not mobilized Internet, but is a generic term of activities of combination and practice of technologies, platforms, commercial modes and applications of the Internet, and mobile communication technologies.

Mobile terminals will be more networked and socialized in future. How will the boring fragmented time of the people be made full use of? Such boring fragmented time is isolated and short. Since a mobile phone and other intelligent terminals are closest to the people, they can be considered as a constituent part of the people.

As the mobile phone becomes a mobile carrier in an information network, the mobile phone is not just a tool for making a call and sending short messages any longer, but is a miniature computer which can achieve ultimate combination of communication and the Internet to enable people to enter the era of mobile informatization really.

The mobile informatization is to realize comprehensive application of an information system on a handheld terminal such as the mobile phone in a manner of fusion of communication technologies such as telecommunications, broadcast and the Internet to achieve the purpose of obtaining relevant information whenever and wherever possible at will at last.

Although the transmission capacity of a traditional media advertisement product is lower than that of electronic media obviously, electronic media are not an "ultimate media form which can replace any one of the traditional print paper media, traditional broadcast, traditional television, traditional Internet and the like" praised highly by some people.

### How do matters stand?

The development of the electronic media still has serious defects and deficiencies. Due to the lack of relevant technical support for achieving cross-media information interaction association, so-called omnimedia is just to prepare the information content of the plane media into an electronic edition to be provided for a user to select.

With the development of a new generation broadcast technology based on DAB (Digital Audio Broadcasting), DVB (Digital Video Broadcasting), DMB (Digital Media Broadcasting) and the like, scientific and technical workers all over the world try hard to solve the relevant problems, for example Chinese invention patents 200310113194.8, 200610072903.6, 200580034624.4, 200620039633.4 and the like, which only effectively improve the transmission capacity of the information.

The smart phone shall log in the relevant electronic Internet of the cross-media product information to obtain richer relevant information epitaxially, the association technology is a non-spanning necessity, and the association technology and a transmission technology are two technical purposes of different concepts.

The existing association technology on the market is mainly a two-dimensional code pattern technical scheme. Although the two-dimensional code pattern technical scheme has become a mature product and industrial chain, there are many technical use condition limits in actual operation, as follows:
1. The smart phone can carry out shooting after downloading an appropriate application.
2. Definition of a two-dimensional code pattern.
3. Light during shooting of the two-dimensional code pattern.
4. Distance for shooting of the two-dimensional code pattern.
5. The two-dimensional code patterns are different in size (including 8mm*8mm, 10mm*110mm...100mm
   *100mm, etc.), and the appearance attractiveness of an advertisement board is influenced with the two-dimensional code patterns.

If the two-dimensional code patterns are implanted into a screen frame and a webpage of a video product... during the actual operation, an electronic screen displays the two-dimensional code patterns for a very short time, and the user operation is difficult.

In addition, the two-dimensional code pattern technical scheme is powerless to achieve broadcast (an audio information technology) association with a multimedia information signal...

Therefore, a simpler and quicker interaction association technology with a high effect for randomly meeting the requirements anytime and anywhere is an urgent hope for the market.

The interaction association system provided by the invention is a technology for achieving barrier-free transmission of the cross-media product information.

### [Summary]

In order to achieve the above purposes, the invention provides a plane publication product supporting an interaction association system. The plane publication product supports transmission and reception of a multimedia information signal of the interaction association system, and is characterized in that
the interaction association system comprises an electronic reading device and an electronic transmitter-receiver;
an information content can be attached to a sheet surface of the plane publication product;
the multimedia information signal is formed by media information data and association data synthesis;
the association data is set URI (Uniform Resource Identifier);
the electronic reading device is provided with a combination data reception circuit, a combination data decomposition circuit and a transmission circuit; the combination data reception circuit is configured to receive the multimedia information signal; the combination data decomposition circuit is configured to decompose the multimedia information signal into the media information data and the association data; the decomposed association data is transmitted to the electronic transmitter-receiver via the transmission circuit;
the electronic transmitter-receiver is provided with an association data reception circuit, an association data transmission circuit and a central processing unit comprising a memory;
the association data reception circuit is equipped with a short-distance signal transmission-reception circuit; and
the electronic transmitter-receiver is mainly configured to control transmission and reception of the association data of the decomposed multimedia information signal, receive the association data decomposed by the transmission circuit of the electronic reading device, transmit the association data to an external information data storage center via a remote wireless technology, and quickly call out an associated electronic file.

An identification mark is attached to the information content of the sheet surface.

The electronic reading device is provided with the combination data reception circuit, the combination data decomposition circuit, the transmission circuit, and a CPU (Central Processing Unit) module board, which are embedded into the plane publication product supporting the interaction association system; and
the electronic transmitter-receiver is provided with an association data reception circuit, an association data transmission circuit and a central processing unit comprising a memory, which are embedded into a communication terminal product of the interaction association system.

The combination data reception circuit, the combination data decomposition circuit, the transmission circuit and a CPU module of the electronic reading device, as well as the association data reception circuit, the association data transmission circuit and a central processing unit module (comprising the memory) of the electronic transmitter-receiver are embedded into the communication terminal product supporting the interaction association system.

The electronic reading device is provided with the combination data reception circuit, the combination data decomposition circuit, the transmission circuit, and the CPU module board, which are placed in a data box supporting the interaction association system.

The electronic transmitter-receiver is provided with an association data reception circuit, an association data transmission circuit and a central processing unit comprising a memory, which are embedded into a communication terminal product of the interaction association system.

The transmission circuit of the electronic reading device is equipped with the short-distance signal transmission-reception circuit;
the combination data decomposition circuit of the electronic reading device is configured to decompose the multimedia information signal into the media information data that includes digital data, video data, audio data, program data, and the like;
the digital data after the decomposition of the media information data is transmitted to the related configuration for use after transmitted to a digital data system for processing;

The video data after decomposition of the media information data is transmitted to related configuration for use after transmitted to a video system for processing;

The audio data after the decomposition of the media information data is transmitted to the related configuration for use after transmitted to an audio system for processing;
the program data after the decomposition of the media information data is transmitted to the related configuration for use after transmitted to a program system for processing; and
the decomposed association data is transmitted by the transmission circuit and the equipped short-distance signal transmission-reception circuit.

An association data module is attached to the electronic reading device.

An association data module is attached to the electronic transmitter-receiver.

A plurality of guide directories are preset for the association data module and are mainly configured to control different association data combinations, and contents of the guide directories of the additional association data module may be adjusted and changed.

The contents of the guide directories of the additional association data module are changed automatically with set time.

The invention provides a plane publication product supporting an interaction association system, which realizes the interactionassociation of cross-media information products and achieves the goal of barrier-free information:
1. The plane publication product may acquire the relevant association data from the multimedia information signal supporting the interaction association system, and the related association data is transmitted synchronously as a quick entry point of an electronic webpage to meet random technical requirements of the mobile informatization anytime and anywhere.
2. Due to the technical combination characteristic of the interaction association system, original functions of the product are not changed, and combined functions can support mutually to achieve an obvious technical effect, the barrier-free association of the cross-media product information is achieved by the simplest point-to-point association technology, and the interaction association capacity of the interaction association system is obviously better than that of the existing QR code and other association technology solutions on the market.

The invention has the particular contribution that the association data can be transmitted by taking various approaches, so that the invention solves the technical problem of information congestion in the mobile informatization development effectively, and assists in improving the existing traffic light facility by using the existing social resources of advertisement boards in bus shelters, and the visually impaired people obtain help of voice guide and relevant traffic information service via the communication terminal product (such as a smart phone) supporting the interaction association system.

### [Brief Description of the Drawings]

Figure 1A is an operation diagram of a plane publication product to obtain single association data;
Figure 1B is a principle diagram of a plane publication product to obtain single association data;
Figure 1C is an operation diagram of a plane publication product to obtain multiple association data;
Figure 1D is a principle diagram of a plane publication product to obtain multiple association data;
Figure 2A is a principle diagram of a multimedia information signal supporting an interaction association system;
Figure 2B is a schematic diagram of a technical application of an interaction association system;
Figure 3A is a design sketch of a traditional print magazine adopting a two-dimensional code pattern technology;
Figure 3B is a design sketch of a traditional print magazine adopting a technology of the invention;
Figure 4A is an operation diagram 1 of Reader's Weekly adopting a technology of the invention;
Figure 4B is an operation diagram 2 of Reader's Weekly adopting a technology of the invention;
Figure 5A is an application diagram of a guide directory of the invention;
Figure 5B is a principle diagram of a guide directory of the invention;
Figure 5C is an application diagram 1 of the invention;
Figure 5D is an application diagram 2 of the invention; and
Figure 5E is an application diagram 3 of the invention;

### [Detailed Description of Preferred Embodiments]

The following embodiments explain and describe the invention, and do not constitute any limit to the invention.

The invention includes a plane publication product which support the Interactive Interconnected Systems. Plane publication product 42 which support the transceive of media information data signal in Interactive Interconnected Systems, wherein:
The Interactive Interconnected Systems is a composite of an electronic reading device 02 and an electronic transmitter-receiver 03.

A plane publication product contains others publication information.

The multimedia information signal is formed by media information data and associated data 12.

The associated data is set to be URI (Uniform Resource Identifier).

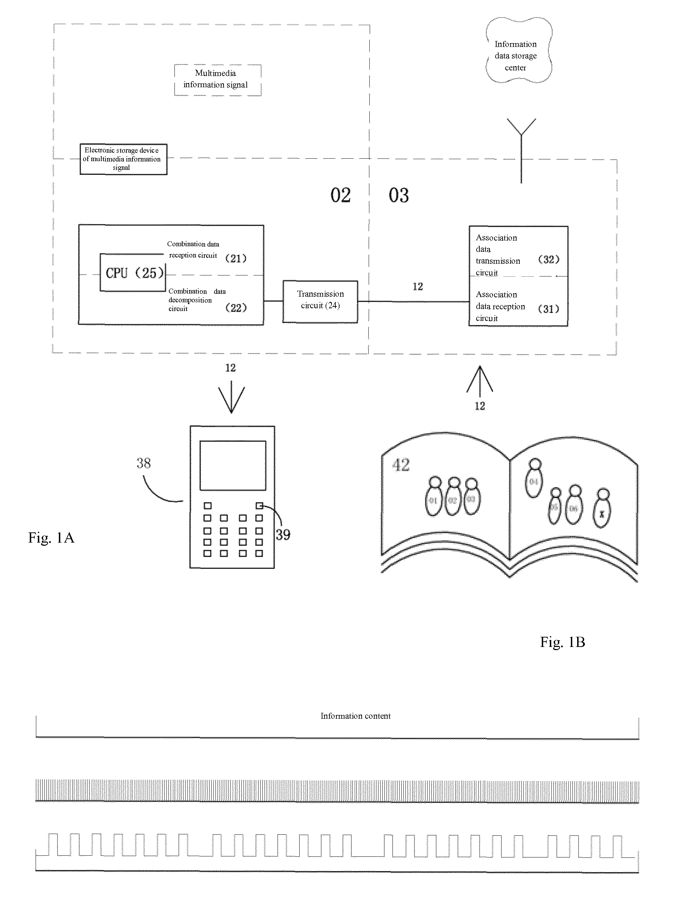

As shown in Figure 1A,
The electronic reading device contains a combination data reception circuit 21, a combination data decomposition circuit 22 and a transmission circuit 24.

The combination data reception circuit is configured to receive the multimedia information signal.

Data decomposition circuit 22 breaks down the multimedia information signal into multimedia information signal and the associated data.

The decomposed associated data is transmitted to the electronic transmitter-receiver via the transmission circuit 24.

The electronic transmitter-receiver contains an associated data reception circuit 31, an associated data transmission circuit 32 and central processing unit (with memory).

The associated data reception circuit 31 is equipped with a short distance signal transmission-reception circuit.

The short-distance communication technology includes NFC and Bluetooth technology, etc.

The electronic transmitter-receiver is used to control the transceive of the associated data from the decomposition multimedia information signal. It receives the associated data decomposed by the transmission circuit of the electronic reading device, and then transmit the associated data to external data storage via remote communication technology. This can obtain the associated digital resource in a quick and efficiency way.

The remote communication technology includes GSM (Global System for Mobile), CDMA (Code Division Multiple Access), GPRS (General Packet Radio Service) and other technologies.

The external data storage can be any storage technology, including resource on internet, cloud storage, or a built-in storage of the electronic reading device, etc.

The called digital resource can be displayed on any product with screen that support interactive interconnected technology, including electronic end product, communication end product, computer, plane publication product, etc.

As shown in Figure 1B,
The called digital resource can be displayed on any product with screen that support interactive interconnected technology, including electronic end product, communication end product, computer, multimedia electronic product, etc.

The plane publication product can be a single- page or a multi-page product. An identification symbol is printed on the sheet.

In order to simplify the operation. A identification symbol is some digits, symbol or some characters, which represent a PTP code.

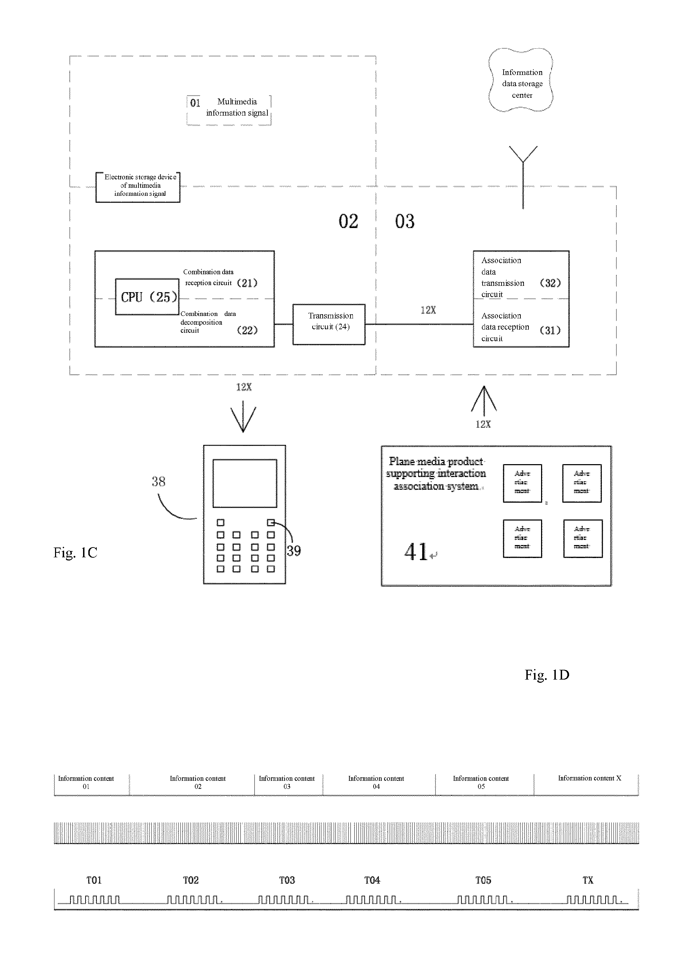

As shown in Figure 1C,
The associated data is an associated data group 12X as a combination of more than one associated data. Different associated data is set to be different URIs (Uniform Resource Identifiers).

As shown in Figure 1D,
6 information contents are shown, and they are representing 6 associated data (i.e. the six URIs (Uniform Resource Identifiers)), and the different URIs (Uniform Resource Identifiers) are associated with different digital resources...

The URI (Uniform Resource Identifier) T01 represents to the information content 01...

The URI (Uniform Resource Identifier) TX represents to the information content X...

The 6 different associated data transmit repeatedly within a readable period.

The associated data is PTP code 14, different PTP code represents different associated data, and different associated data represents different URIs (Uniform Resource Identifiers).

The application of the existing technical solution on the market is as follows.

The information content of the plane publication product (such as a paper publication) is a planar information technology. The spread efficiency of the plane publication product is much lower than that of electronic media.

In order to improve the spread efficiency of the plane publication product, there're various solutions on the market. One technical solution is QR code. Relevant application examples are as follows.

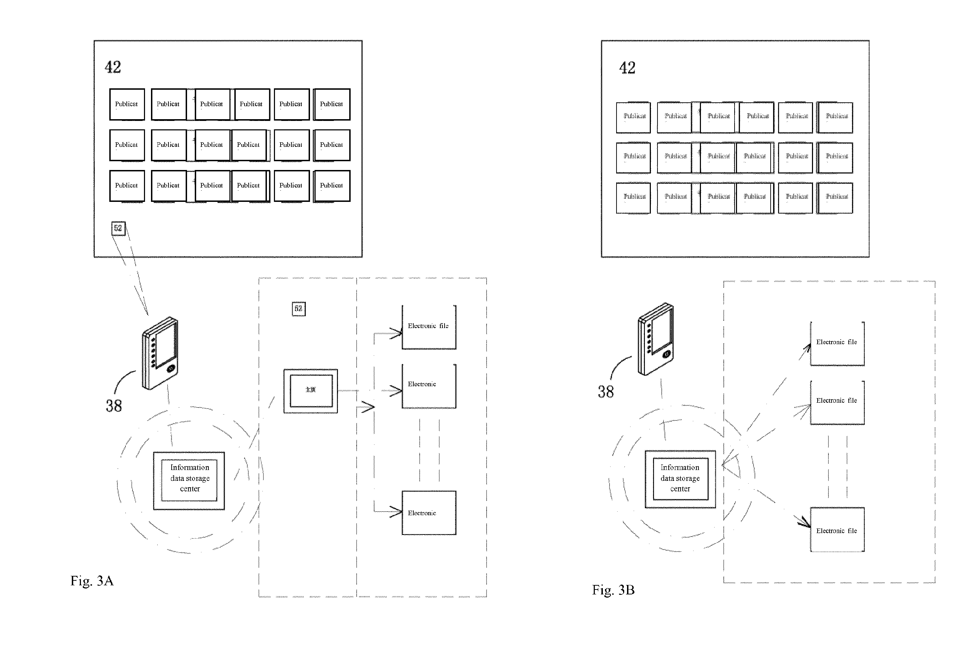

As shown in Figure 3A,
Print Weekly 42 contains a QR code (the planar information technology). Reader can read the relative information.
1. Smartphone captures the QR code and converts it into URI (Uniform Resource Identifier)...
2. Access to the website of the URI (Uniform Resource Identifier)
3. The traditional website search operation is carried out...

It shall be especially emphasized that the operation will be very complicated if the URIs of the 2 QR codes on Print Weekly are not come form the same website.

The relevant embodiments of the invention are as follows.

### First mode:

The electronic reading device is a plane publication product which is embedded into of the Interactive Interconnected Systems. It combined by a data reception circuit, a combination data decomposition circuit, a transmission circuit, a CPU (Central Processing Unit) module board

The electronic transmitter-receiver is a communication end product is embedded into of the Interactive Interconnected Systems. It combined by an associated data reception circuit, an associated data transmission circuit and a central processing unit (with memory).

Interactive Interconnected Systems does not change the function of the original product. Interactive Interconnected Systems and the product assist each other when the product integrate with Interactive Interconnected Systems, and the effect is obvious. A barrier-free information connection of cross-media product can be achieved by this simplest point-to-point association technology.

There are two operating methods for obtaining the associated data basically:
First method: On the smart phone (within an effective range), the association operation key 39 is pressed (to start the Interactive Interconnected Systems), and then the operation key 39 is pressed again. The electronic transmitter-receiver can obtain the selected associated data (i.e. the URI (Uniform Resource Identifier)) from the electronic reading device;
Second method: On the smart phone (within an effective range), the association operation key 39 is pressed (to start the Interactive Interconnected Systems), and then input the assigned digit (the PTP code) of the information content (a planar identification mark). The electronic transmitter-receiver can obtain the selected associated data (i.e. the URI (Uniform Resource Identifier)) from the electronic reading device...

Another method is as follows: the user presses an enter key after accomplishing relevant steps of the first method or the second method, and the electronic transmitter-receiver can obtain the selected associated data from the electronic reading device for storage.

Afterwards, the associated digital resource can be obtained anytime. The associated data can be transmitted to the data storage center via the transmission circuit and obtain the associated digital resource for viewing (or listening) on the smart phone.

### Second mode:

The electronic reading device is a electronic multimedia product which is embedded into of the Interactive Interconnected Systems. It combined by a data reception circuit, the combination data decomposition circuit, the transmission circuit and the CPU module of the electronic reading device, as well as the associated data reception circuit, the associated data transmission circuit and the central processing unit module (with memory) of the electronic transmitter-receiver.

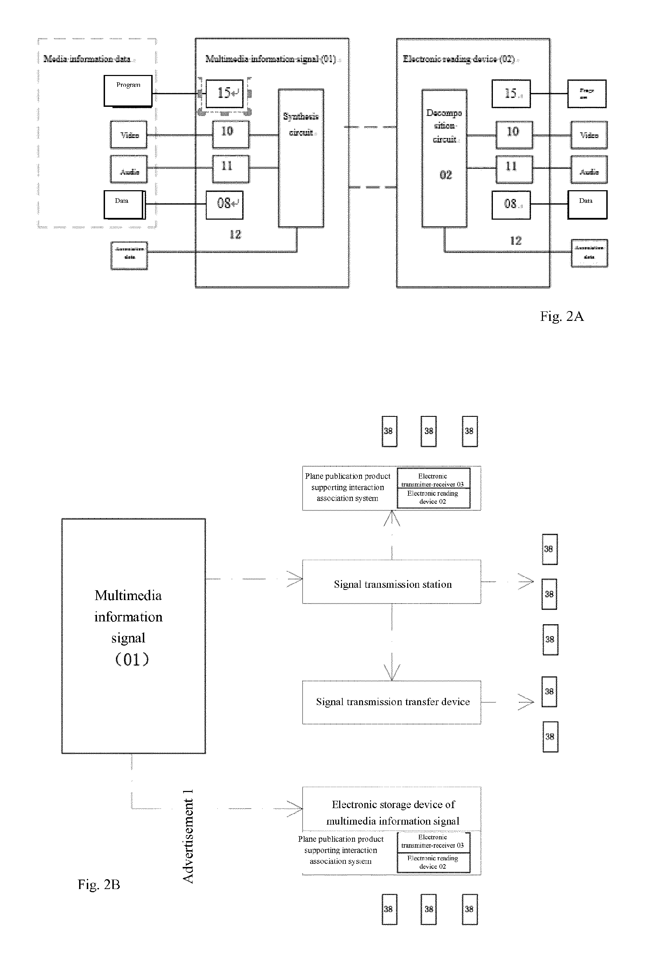

As shown in Figures 1A, 1C and 2B, the user receives the associated data from the electronic multimedia product supporting the Interactive Interconnected Systems via the communication end product (the smart phone) under the guidance of the media information content of the electronic multimedia product, and then transmits the associated data synchronously to achieve a point-to-point effect.

It shall be especially emphasized that the mode is convenience for the visually impaired people to read.

### Third mode:

The electronic reading device is provided with the combination data reception circuit, the combination data decomposition circuit, the transmission circuit, and the CPU module board. To make it easy to carry and use, they are placed in to Data Box 43 that support Interactive Interconnected Systems.

The electronic transmitter-receiver is a communication end product is embedded into of the Interactive Interconnected Systems. It combined by an associated data reception circuit, an associated data transmission circuit and a central processing unit (with memory).

The transmission circuit of the electronic reading device is equipped with a short-distance signal transmission-reception circuit.

The combination data decomposition circuit of the electronic reading device is configured to decompose the multimedia information signal into the media information data that includes digital data 08, video data 10, audio data 11, program data 15, etc.

The media information is decomposed into digital data. The digital data will be transmitted to a digital data system for processing. And then the digital data will be transmitted to related device for use.

The media information is decomposed into video data. The video data will be transmitted to a digital data system for processing. And then the video data will be transmitted to related device for use.

The media information is decomposed into audio data. The audio data will be transmitted to a digital data system for processing. And then the audio data will be transmitted to related device for use.

The media information is decomposed into program data. The program data will be transmitted to a digital data system for processing. And then the program data will be transmitted to related device for use.

The decomposed associated data is transmitted by the transmission circuit and the equipped short-distance signal transmission-reception circuit.

The electronic transmitter-receiver contains the association operation key 39, a signal induction device 36 which support the Interactive Interconnected Systems, and an electronic display screen.

The associated data transmits repeatedly within a readable period of the media information data. The user presses the association operation key 39, and the electronic transmitter-receiver receives the associated data decomposed by the transmission circuit of the electronic reading device, and then transmits the associated data to external data storage via remote communication technology. Then it call out the associated digital resource from the information data storage center.

Since there are many information signals exist in an atmosphere. The communication end product which integrated with the Interactive Interconnected Systems contains the signal induction device 36 (including light, sound and the like). It reminds the user that the relevant associated data of the Interactive Interconnected Systems can be provided the effective range where the user is located which particularly meets the requirements of the visually impaired people.

### Embodiment 1

As shown in Figure 3B,
The communication end product 38 integrated with the invention, the associated data can be obtained easily by the first or second method... Obviously, the visually impaired people can carry out operations and use.

Since there're many type of publications in the market, the plane information technology and an electronic information technology are totally different. There is no efficient way to solve the problem.

The electronic reading device contains a associated data module.

And the electronic transmitter-receiver contains a associated data module as well.

A associated data module has many orientation directories by default. Different orientation directories control different associated data group. The additional associated data module is adjustable.

### Embodiment 2

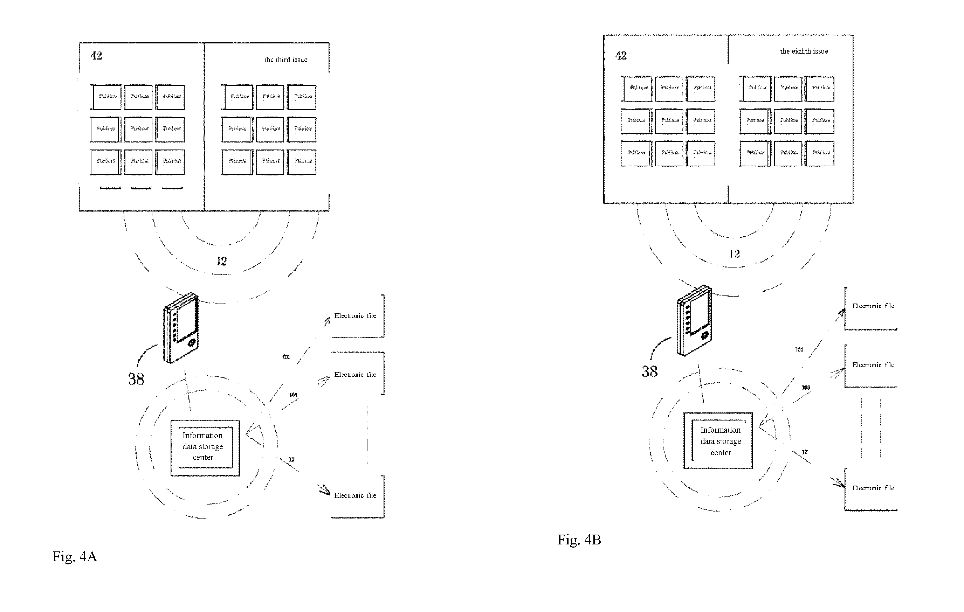

As shown in Figure 4A, Reader's Weekly 41 issue 3 contains the orientation directory 01. On the smart phone (within an effective range), the association operation key 39 is pressed (to start the Interactive Interconnected Systems), and then input the assigned digit (the PTP code) of the information content (a planar identification mark). The electronic transmitter-receiver can obtain the selected associated data (i.e. the URI (Uniform Resource Identifier)) from the electronic reading device...The associated data is the electronic file corresponding to the content of the third issue.

As shown in Figure 4B, Reader's Weekly 41 issue 8 contains the orientation directory 01. On the smart phone (within an effective range), the association operation key 39 is pressed (to start the Interactive Interconnected Systems), and then input the assigned digit (the PTP code) of the information content (a planar identification mark). The electronic transmitter-receiver can obtain the selected associated data (i.e. the URI (Uniform Resource Identifier)) from the electronic reading device...The associated data is the electronic file corresponding to the content of the eighth issue.

Though the assigned digit (the identification marks) are the same, the readers obtains difference electronic file corresponding to the issue of the Reader's Weekly based on master control of the different guide directories.

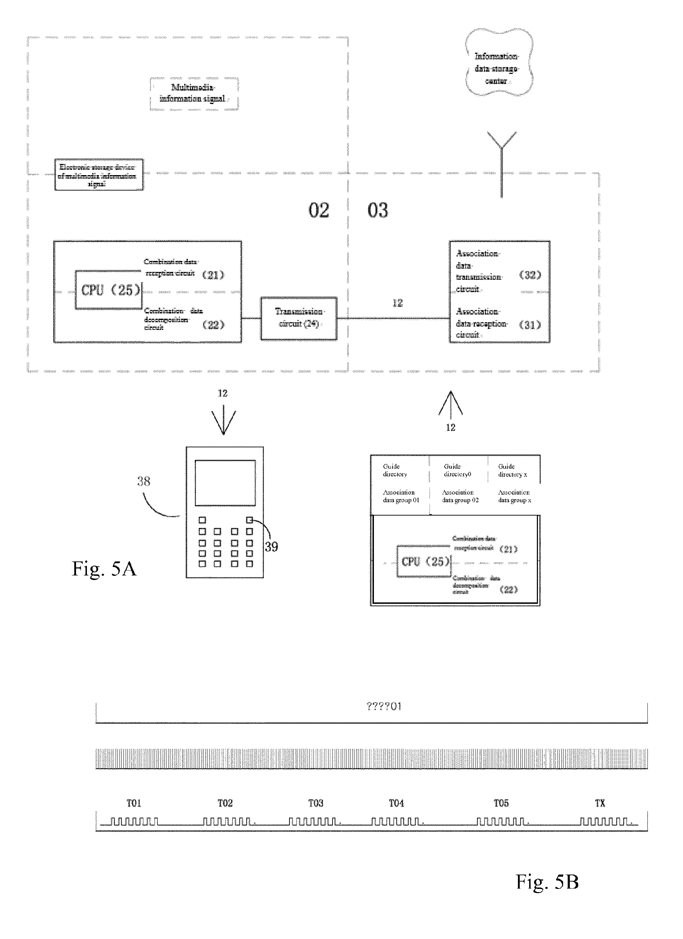

As shown in Figures 5A and 5B,
In order to facilitate the reader, the changing condition can be preset depends on the need of different plane publication product.

For example, the orientation directories can be set as daily change, weekly change, or monthly change automatically.

An associated data module has many orientation directories by default. Different orientation directories control different associated data group. The additional associated data module is adjustable.

The contents of the orientation directories of the additional associated data module will be changed automatically with time.

### Embodiment 3

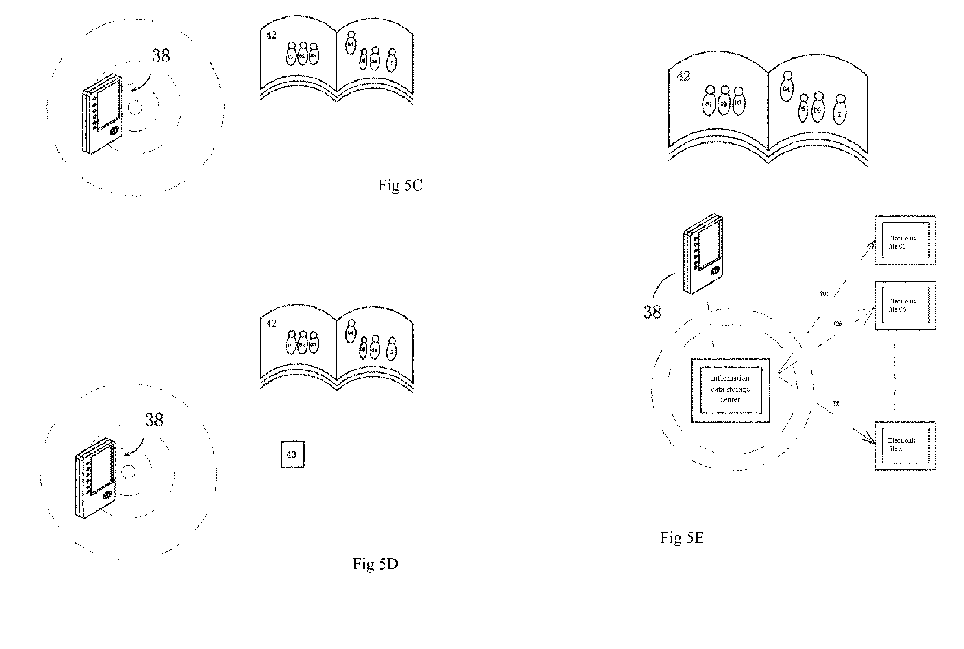

As shown in Figure 5C, the smart phone obtains the associated data of the relevant media information signal via a Textbook of a plane publication.

As shown in Figure 5D, the smart phone obtains the associated data of the relevant media information signal via the data box 43 which support the Interactive Interconnected Systems.

As shown in Figure 5E, the smart phone obtains the associated data of the relevant media information signal via the built-in associated data module.

The association address data can be a hybrid data 12Mwhich mixed with content data such as characters, images, audio and video. The association hybrid data 12M is decomposed into the associated data by an association hybrid data decomposition circuit. User can view the relevant characters, images, audio and video displayed on an electronic display screen according to their need.

Operation in retrieving data of the invention compare to QR codes:
1. The Interactive Interconnected Systems shall be embedded into the smart phone for support, which is the same as the QR codes.
2. Obtaining of the associated data is much more sensitive and accurate than capturing of the QR codes.
3. The associated data can be obtained without influence of light conditions.
4. The distance for obtaining the associated data can be set the range of tens of meters if required, and the invention is very stable, while the QR code technical scheme has an operation-able range of about 1 m under the normal condition.
5. Use digit instead of the QR codes can reduce the influence on the appearance attractiveness of the advertisement boards.

From the above relevant embodiments, base on the comparison between the invention and the relevant solutions and product on the market. The invention is obviously superior to the others in use, operation, manufacturing cost and transmission effect. The development of the invention will affect every parts of a commercial chain, and create a brand-new commercial mode and value chain.

The invention is revealed through the above embodiments, the usage of the invention is not limited to those. The above elements may be replaced by similar or identical elements realized by those technical under the condition of not deviating from the concept of the invention.

## Claims

1. The invention includes a plane publication product which support the Interactive Interconnected Systems. Plane publication product (42) is the combination of associated data 12 and media information data (01), wherein:
The Interactive Interconnected Systems is a composite of an electronic reading device (02) and an electronic transmitter-receiver (03).
An information content can be attached to a sheet surface of the plane publication product; the multimedia information signal is synthesized by media information data and associated data (12); the associated data is set URI (Uniform Resource Identifier);
The electronic reading device contains a combination data reception circuit (21), a combination data decomposition circuit (22) and a transmission circuit (24).
The combination data reception circuit is configured to receive the multimedia information signal.
Data decomposition circuit (22) breaks down the multimedia information signal into multimedia information signal and the associated data.
The decomposed associated data is transmitted to the electronic transmitter-receiver via the transmission circuit (24).
The electronic transmitter-receiver is provided with an associated data reception circuit (31), an associated data transmission circuit (32) and a central processing unit comprising a memory; the associated data reception circuit (31) is equipped with a short-distance signal transmission-reception circuit; and the electronic transmitter-receiver is mainly configured to control transmission and reception of the associated data of the decomposed multimedia information signal, receive the associated data decomposed by the transmission circuit of the electronic reading device, transmit the associated data to an external information data storage center via a remote wireless technology, and quickly call out an associated electronic file.

2. The feature of plane publication product which support the Interactive Interconnected Systems of claim 1:
A plane publication product contains others publication information.

3. The feature of plane publication product which support the Interactive Interconnected Systems of claim 1:
The electronic reading device is a plane publication product which is embedded into of the Interactive Interconnected Systems. It combined by a data reception circuit, a combination data decomposition circuit, a transmission circuit, a CPU (Central Processing Unit) module board
The electronic transmitter-receiver is a communication end product is embedded into of the Interactive Interconnected Systems. It combined by an associated data reception circuit, an associated data transmission circuit and a central processing unit (with memory).

4. The feature of plane publication product which support the Interactive Interconnected Systems of claim 1:
The electronic reading device is a electronic multimedia product which is embedded into of the Interactive Interconnected Systems. It combined by a data reception circuit, the combination data decomposition circuit, the transmission circuit and the CPU module of the electronic reading device, as well as the associated data reception circuit, the associated data transmission circuit and the central processing unit module (with memory) of the electronic transmitter-receiver.

5. The feature of plane publication product which support the Interactive Interconnected Systems of claim 1:
The electronic reading device is provided with the combination data reception circuit, the combination data decomposition circuit, the transmission circuit, and the CPU module board. They are placed in to Data Box (43) that support Interactive Interconnected Systems.
The electronic transmitter-receiver is a communication end product is embedded into of the Interactive Interconnected Systems. It combined by an associated data reception circuit, an associated data transmission circuit and a central processing unit (with memory).

6. The feature of plane publication product which support the Interactive Interconnected Systems of claim 1:
The transmission circuit of the electronic reading device is equipped with the short-distance signal transmission-reception circuit;
The combination data decomposition circuit of the electronic reading device is configured to decompose the multimedia information signal into the media information data that includes digital data (08), video data (10), audio data (11), program data (15), etc.
The media information is decomposed into digital data. The digital data will be transmitted to a digital data system for processing. And then the digital data will be transmitted to related device for use.
The media information is decomposed into video data. The video data will be transmitted to a digital data system for processing. And then the video data will be transmitted to related device for use.
The media information is decomposed into audio data. The audio data will be transmitted to a digital data system for processing. And then the audio data will be transmitted to related device for use.
The media information is decomposed into program data. The program data will be transmitted to a digital data system for processing. And then the program data will be transmitted to related device for use.
The decomposed associated data is transmitted by the transmission circuit and the equipped short-distance signal transmission-reception circuit.

7. The feature of plane publication product which support the Interactive Interconnected Systems of claim 1:
The electronic reading device contains a associated data module.

8. The feature of plane publication product which support the Interactive Interconnected Systems of claim 1:
And the electronic transmitter-receiver contains a associated data module as well.

9. The plane publication product supporting the Interactive Interconnected Systems of claim 7 or 8, wherein
An associated data module has many orientation directories by default. Different orientation directories control different associated data group. The additional associated data module is adjustable.

10. The plane publication product supporting the Interactive Interconnected Systems of claim 9, wherein
The contents of the orientation directories of the additional associated data module will be changed automatically with time.
